# EUROPEAN PATENT APPLICATION

(11) **EP 4 851 908 A1**
(43) Date of publication of application: **09.12.2026**
(21) Application number: 25771597.9
(22) Date of filing: 14.01.2025
(51) Int. Cl.: G06Q 30/06

(54) **SERVER, METHOD, AND PROGRAM**

(30) Priority: 13.03.2024 JP 2024038758
(71) Applicant: Sumitomo Mitsui Banking Corporation, Tokyo 100-0005 (JP)
(72) Inventor: KUGA Tomoya, Tokyo 100-0005 (JP)
(74) Representative: Forresters IP LLP
(86) International application number: PCT/JP2025/000903
(87) International publication number: WO 2025/192014

(57) **Abstract**

A server (20) according to an exemplary aspect of the present disclosure includes a non-fungible token issuance unit (221), a transaction management unit (223), and a shipment management unit (225). The non-fungible token issuance unit (221) issues, on a blockchain, a first non-fungible token associated with a right to claim delivery of an alcoholic beverage product, and a second non-fungible token associated with ancillary data related to the alcoholic beverage product. The transaction management unit (223) manages transactions on the blockchain involving the first non-fungible token and the second non-fungible token. The shipment management unit (225) instructs, when a deletion request to delete the first non-fungible token is made in the transaction, a manufacturer terminal of the alcoholic beverage product to ship the alcoholic beverage product to a delivery destination designated by a request source terminal that has made the deletion request.

## Description

### Technical Field

The present disclosure relates to a server, a method, and a program.

### Background Art

Regarding alcoholic beverages such as whiskey or wine, there is a technique for managing transfer of ownership on a per-barrel basis by utilizing a blockchain technique (e.g., non-fungible tokens). A non-fungible token (NFT) is a type of token on which transactions are recorded on a blockchain and is issued in conformity with the ERC (Ethereum Request for Comments) 721 standard, which is a standard for NFTs, for example.

### Citation List

### Patent Literature

PTL 1: Japanese Patent No. 6829927
PTL 2: Japanese Patent No. 7389527

### Summary of Invention

However, in existing techniques utilizing NFTs, for example, it is merely possible to manage transfer of ownership of alcoholic beverages (barrels of alcohol) using NFTs. Thus, it may be worth considering providing consumers who hold ownership of an alcoholic beverage together with related ancillary information or data.

One of exemplary purposes of the present disclosure is to allow a consumer to be provided with a non-fungible token associated with a right to claim delivery of an alcoholic beverage product as well as a non-fungible token associated with ancillary data related to the alcoholic beverage product.

Thus, a server according to an exemplary aspect of the present disclosure includes: a non-fungible token issuance unit that issues, on a blockchain, a first non-fungible token associated with a right to claim delivery of an alcoholic beverage product, and a second non-fungible token associated with ancillary data related to the alcoholic beverage product, a transaction management unit that manages transactions on the blockchain involving the first non-fungible token and the second non-fungible token, and a shipment management unit that instructs, when a deletion request to delete the first non-fungible token is made in the transaction, a manufacturer terminal of the alcoholic beverage product to ship the alcoholic beverage product to a delivery destination designated by a request source terminal that has made the deletion request.

According to an exemplary aspect of the present disclosure, it is possible to provide a consumer with a non-fungible token associated with a right to claim delivery of an alcoholic beverage product as well as a non-fungible token associated with ancillary data related to the alcoholic beverage product.

### Brief Description of Drawings

[FIG. 1] FIG. 1 is a diagram illustrating a configuration example of an NFT service system according to an embodiment.
[FIG. 2] FIG. 2 is a block diagram illustrating a configuration example of an NFT server illustrated in FIG. 1.
[FIG. 3] FIG. 3 is a diagram illustrating an example of customer data illustrated in FIG. 1.
[FIG. 4] FIG. 4 is a diagram illustrating an example of RWA (real world asset)-related data illustrated in FIG. 1.
[FIG. 5] FIG. 5 is a diagram illustrating an example of NFT management data illustrated in FIG. 1.
[FIG. 6] FIG. 6 is a diagram illustrating an example of a data structure of an NFT according to an embodiment.
[FIG. 7] FIG. 7 is a diagram illustrating an overall operational flow in the NFT service system illustrated in FIG. 1 in a case where a consumer personally consumes a product.
[FIG. 8] FIG. 8 is a diagram illustrating an overall operational flow in the NFT service system illustrated in FIG. 1 in a case where a consumer gifts a product to another consumer.
[FIG. 9] FIG. 9 is a flowchart illustrating an operation example focusing on the NFT server in the operational flows illustrated in FIGs. 7 and 8.

### Description of Embodiments

An embodiment will be described in detail below with reference to the drawings. However, the accompanying drawings and the following descriptions are provided for one skilled in the art to fully understand the present disclosure and are not intended to limit the subject matter recited in the claims. Further, unnecessarily detailed descriptions may be omitted.

For example, detailed descriptions of already well-known matters or redundant descriptions of substantially identical constituents may be omitted. This is to prevent the following descriptions from being unnecessarily redundant and to facilitate one skilled in the art's understanding. Further, the same or similar reference sign may indicate the same or similar element, and repeated descriptions may be omitted. In a case where a numerical value is given in the following descriptions, the numerical value is merely an example, and another numerical value may be used additionally or alternatively.

### <System Configuration Example>

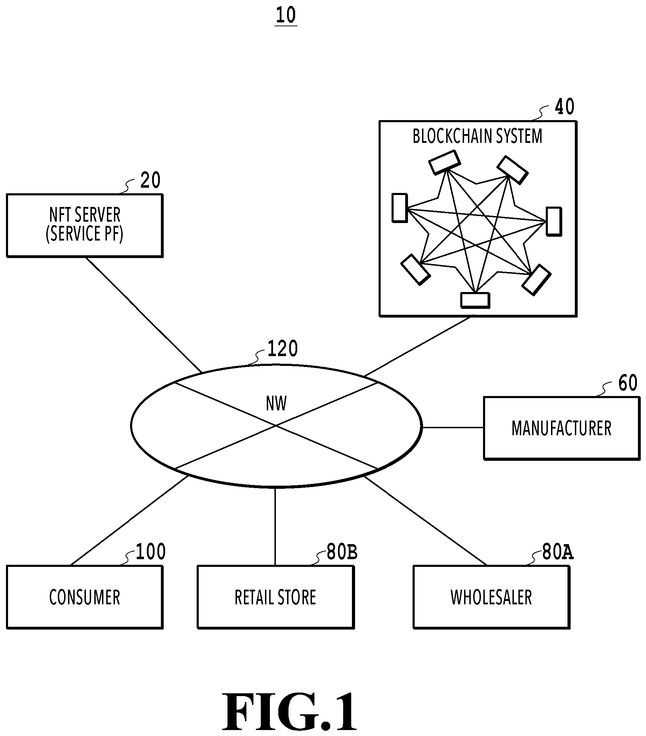

FIG. 1 is a diagram illustrating a configuration example of an NFT service system 10 according to an embodiment. The NFT service system 10 illustrated in FIG. 1 (hereinafter, may be referred to as "system 10") includes, for example, a server computer 20 that provides an NFT service PF (platform), a blockchain system 40, and client computers 60, 80A, 80B, and 100.

The server computer 20 may be conveniently referred to as "NFT server 20" or "NFT service PF 20." The term "computer" may be replaced with another term such as "apparatus," "terminal," "node," or "entity." One or more of the NFT server 20 and client terminals 60, 80A, 80B, and 100 may correspond to nodes that constitute the blockchain system 40.

The NFT server 20, the blockchain system 40, and the client terminals 60, 80A, 80B, and 100 are connected to a network (NW) 120 and are available to communicate with each other. The network 120 may be either a wired or wireless network, or may also be a network in which wired and wireless connections are combined.

The wireless network may be a network conforming to standards developed by the 3GPP (3rd Generation Partnership Project) (registered trademark), such as 3G, LTE (Long Term Evolution), 4G, 5G, and 6G, or may be a Wi-Fi network compliant with the IEEE (Institute of Electrical and Electronics Engineers) 802.11 series standard. A non-limiting example of the network 120 may include the Internet.

The blockchain system 40 (hereinafter, may be referred to as "blockchain 40") is a computer system (or network) that includes, for example, a plurality of nodes (computers) connected by P2P (peer-to-peer). The blockchain 40 is configured, for example, to record transactions relating to NFTs in a distributed manner between wallet addresses assigned to respective users of the NFT service system 10.

Transactions relating to NFTs may include, for example, issuance (or mapping) of NFTs to a specific wallet address, transfer of NFTs between wallet addresses, and/or "burning" which means deletion or invalidation of NFTs. The issuance of NFTs is also referred to as "minting."

Incidentally, NFTs are unique, non-fungible digital data uniquely identified on the blockchain 40. For example, by being recorded on the blockchain 40 in a distributed manner, NFTs may function as digital data accompanied by an unforgeable certificate of authenticity and proof of ownership.

A wallet address is, for example, address information that indicates the location of a wallet associated with a resource on the blockchain 40. In comparison between digital space and the real world on the blockchain 40, "wallet" (which may also be referred to as "wallet account") may correspond to, for example, "bank account," and "wallet address" may correspond to, for example, "bank account number."

The "wallet address" may be a character string (e.g., a public key) that forms a pair with a character string (e.g., a private key) held by a user who has an access right to the "wallet," or a character string generated based on the public key. In this case, the private key represents a legitimate access right to the "wallet account" and may correspond to, for example, a password for logging in or signing in to the "wallet account."

Issuance and/or management of a wallet address may be performed, for example, by the NFT server 20, or by a wallet management server (not illustrated) which is connected to the NW 120 and is different from the NFT server 20.

Users of the NFT service system 10 may include, for example, manufacturers who provide products (or goods) as real world assets (RWAs), wholesalers of the products, retailers of the products, and consumers of the products. The consumers may include either one or both of a consumer who obtains a product for the purpose of self-consumption and a consumer who obtains a product from another consumer (through transfer), for example, as a gift. A non-limiting example of the products is an alcoholic beverage product such as whiskey or wine.

In FIG. 1, for example, the client terminal 60 corresponds to a "manufacturer terminal 60" that may be operated by a manufacturer of an alcoholic beverage product. The client terminal 80A corresponds to, for example, a "wholesaler terminal 80A" that may be operated by a wholesaler of the alcoholic beverage product, and the client terminal 80B corresponds to, for example, a "retail store terminal 80B" that may be operated by a retail store of the alcoholic beverage product. Since both the wholesaler and the retail store are vendors of the alcoholic beverage product, the wholesaler terminal 80A and the retail store terminal 80B may be collectively referred to as "vendor terminal 80."

The client terminal 100 corresponds to, for example, a "consumer terminal 100" that may be operated by a consumer of the alcoholic beverage product. Two or more manufacturer terminals 60, two or more wholesaler terminals 80A, two or more retail store terminals 80B, and two or more consumer terminals 100 may be provided in the system 10.

Each of the client terminals 60, 80A, 80B, and 100 may be any type of apparatus or device having communication capabilities. As a non-limiting example, one or more of the client terminals 60, 80A, 80B, and 100 may be a laptop or desktop personal computer (PC), a mobile phone, a smartphone, a tablet PC, or any combination thereof.

The NFT server 20 is configured so that an NFT associated with (or representing), for example, a right exercisable in relation to an alcoholic beverage product provided by a manufacturer, such as a right to claim delivery of the alcoholic beverage product (hereinafter also referred to as "acquisition right"), may be minted to a wallet address to which a user who wishes to purchase the alcoholic beverage product has an access right.

A terminal to be operated to purchase the alcoholic beverage product may be any of the wholesaler terminal 80A, the retail store terminal 80B, or the consumer terminal 100. Further, a plurality of NFTs may be minted together as virtual inventories of the alcoholic beverage product to a wallet address to which the manufacturer terminal 60 has an access right.

The NFT associated with the acquisition right is an example of a first NFT and may be referred to as "acquisition right NFT" for convenience. The acquisition right NFT may be understood as functioning as a "voucher" for a physical alcoholic beverage product (which may also be referred to as "actual product").

The "acquisition right" may also be a "priority acquisition right" (also referred to as "allow list") which allows preferential treatment over the "acquisition right" with respect to, for example, the purchase price and/or purchase availability period of the alcoholic beverage product. The "priority acquisition right" may also be understood to function as a "reservation voucher."

The alcoholic beverage product associated with the acquisition right NFT (including a priority acquisition right NFT; the same applies hereinafter) may be an alcoholic beverage product (actual product) that actually exists as a finished product at the time of NFT issuance, or may be an alcoholic beverage product that is planned to be manufactured or completed after the NFT issuance.

In a case where the vendor terminal 80 of an alcoholic beverage product wishes to purchase one or more alcoholic beverage products manufactured by a manufacturer, the vendor terminal 80 purchases an acquisition right NFT instead of an actual product. Similarly, the consumer terminal 100 purchases an acquisition right NFT instead of an actual product from either the manufacturer terminal 60 or the vendor terminal 80.

In this way, the acquisition right NFT for the alcoholic beverage product is distributed from a manufacturer to a vendor, and from the vendor to a consumer, without an actual product being involved. In other words, each time purchase of the acquisition right NFT (a sales contract or transfer contract) is concluded, a transfer transaction involving the acquisition right NFT between wallet addresses is recorded on the blockchain 40.

A consumer of the alcoholic beverage product may, for example, declare or represent to the NFT server 20 that the consumer exercises a right to claim delivery of the actual alcoholic beverage product by operating the consumer terminal 100 to burn an acquisition right NFT minted to the consumer's wallet address.

The NFT server 20, upon receiving the declaration or representation of the exercise of the right to claim delivery instructs, for example, the manufacturer terminal 60 to deliver the alcoholic beverage product. As a result, the consumer obtains the actual alcoholic beverage product represented by the burned acquisition right NFT.

The transactions involving the acquisition right NFT on the blockchain 40 as described above (e.g., minting, transfer, and burning) are sequentially recorded on the blockchain 40 in a tamper-proof manner. For example, each time the acquisition right NFT is transferred between wallet addresses, the NFT server 20 updates owner (ownership) information on the acquisition right NFT with new owner information. Ownership information is also referred to as owner (or holder) ID and may be represented, for example, by a wallet address to which an NFT has been minted.

Thus, for example, it is possible for the NFT server 20 or the manufacturer terminal 60 in cooperation with the NFT server 20 to confirm a distribution route for the acquisition right NFT by referring to the transaction history of the acquisition right NFT recorded on the blockchain 40.

Therefore, it is possible for the manufacturer terminal 60 to, for example, obtain information on a customer who has used (burned or transferred) the acquisition right NFT, and trace who ultimately has consumed the alcoholic beverage product through which transfer transactions the NFT passed.

As described above, by distributing an NFT associated with a right to acquire an actual product in place of the actual product itself, it is possible to prevent, for example, quality deterioration and an inflow of counterfeit products in a distribution route for the actual product. Popular alcoholic beverage products (e.g., whiskey) are easily targeted to be resold at inflated prices due to illicit resale, which is not intended by manufacturers. For the manufacturers, in distribution channels that are difficult to control and where illicit resale may occur, the brand values may be damaged due to quality deterioration of the alcoholic beverage product during distribution (which may include, for example, unauthorized rebottling of whisky or the like) or the inflow of counterfeit products.

According to the system 10 of the present disclosure, by distributing acquisition right NFTs in place of actual products, it is possible to form a commercial distribution flow that is controllable or manageable by the NFT server 20 without involving any actual products. Thus, it is possible to prevent a deterioration in the quality of alcoholic beverage products and illicit resale and to protect the brand values of the alcoholic beverage products. As a result, it is ultimately possible to protect manufacturers and consumers.

Further, it is possible to confirm in the NFT server 20 information indicative of whether a genuine alcoholic beverage product manufactured by a manufacturer has reached a consumer through an authorized distribution route and to provide such information to the manufacturer terminal 60. Thus, for example, it is possible for the manufacturer terminal 60 to visualize information about the consumer who has purchased the alcoholic beverage product at a fair price through the authorized distribution route. Accordingly, the manufacturer is available to utilize, for example, provided information for strategies such as sales promotion, advertising, and marketing of the alcoholic beverage product.

Here, the NFT server 20 of the present embodiment may also be configured to generate an NFT associated with (or representing) ancillary data (hereinafter, may be referred to as "RWA-related data") related to an alcoholic beverage product to be purchased using an acquisition right NFT and issue the NFT on the blockchain 40 together with the acquisition right NFT. The RWA-related data may include collectible data that has value for consumers to collect, and an NFT associated with such collectible data may be referred to as "collectible NFT," for convenience.

A collectible NFT is an example of a second NFT, for example, may be minted together with an acquisition right NFT to the same wallet address, and may be distributed on the blockchain 40 together with the acquisition right NFT in the aforementioned commercial distribution flow without involving any actual products. The collectible NFT may, for example, be controlled or managed by the NFT server 20 to be distributed on the blockchain 40 together with the acquisition right NFT until the collectible NFT is ultimately delivered to the end consumer.

For example, the collectible NFT may be transferred between wallet addresses in a state to an acquisition right NFT as a bindable NFT available to be associated with another NFT, such as those specified in the ERC 5700 standard. Incidentally, The biding may be released by the NFT owner at any time.

A consumer is allowed to selectively burn or transfer, among an acquisition right NFT and a collectible NFT, the acquisition right NFT and to keep holding the collectible NFT without burning or transferring the collectible NFT. In a case where the collectible NFT is bound to the acquisition right NFT, it is possible for the consumer to release (or unbind) the binding and burn the acquisition right NFT.

RWA-related data may include, for example, data regarding the process of manufacturing an alcoholic beverage product, data indicative of the etiquette (or label) of the alcoholic beverage product, data regarding the history of the manufacturer (which may include, for example, a manufacturing plant and/or brewery) of the alcoholic beverage product, data regarding the history of the alcoholic beverage product, data indicative of comments regarding the alcoholic beverage product (e.g., tasting comments by a brewer), and other data related to the alcoholic beverage product. The data may be image data. The image data may be still image data or video data.

The data regarding the process of manufacturing the alcoholic beverage product may include, for example, information indicative of the aging period and/or the degree of aging (aging level) of whiskey (hereinafter, may be abbreviated as "aging level information"). The aging level information may include, for example, information regarding an intermediate aging stage before the whiskey is commercialized as a finished product as well as information at a stage when whiskey is drawn from an aging barrel (cask) and commercialized (bottled) as a finished product.

The quality of whiskey may be different depending on the aging period in the cask and/or the amount of whiskey drawn from the cask for bottling. Therefore, by tokenizing information on an aging level at a pre-bottling (intermediate aging) stage into an NFT, it is possible to present information on the aging level of the whiskey product to a consumer before the consumer obtains a finished product.

Thus, it is possible for the consumer to obtain a finished product with an aging level suited for the consumer's preference by burning an acquisition right NFT at a timing when the consumer prefers for the aging level of whiskey. In other words, the consumer is allowed to choose a timing when to exercise a right to claim delivery of the alcoholic beverage product as a finished product based on the information on the intermediate aging level, thereby enabling the consumer to instruct the manufacturer, for example, on when the whiskey is to be bottled as a finished product. The information on the intermediate aging level may be represented as information indicative of a timing when aging in the cask is expected to reach an expected aging level.

By distributing a collectible NFT associated with aging level information on each alcoholic beverage product together with an acquisition right NFT for the alcoholic beverage product, it is possible to visualize and present invisible values, such as the degree of aging, to a consumer as an ancillary value.

Therefore, it is possible for the consumer to enjoy a new experiential value different from etiquette collection in the real world. Further, by tokenizing information such as the manufacturer's history or tasting comments regarding a whiskey product into NFTs and distributing the NFTs together with acquisition right NFTs, it is possible for the manufacturer to directly convey a message that the manufacturer wishes to deliver to the consumer.

### <Configuration Example of NFT Server 20>

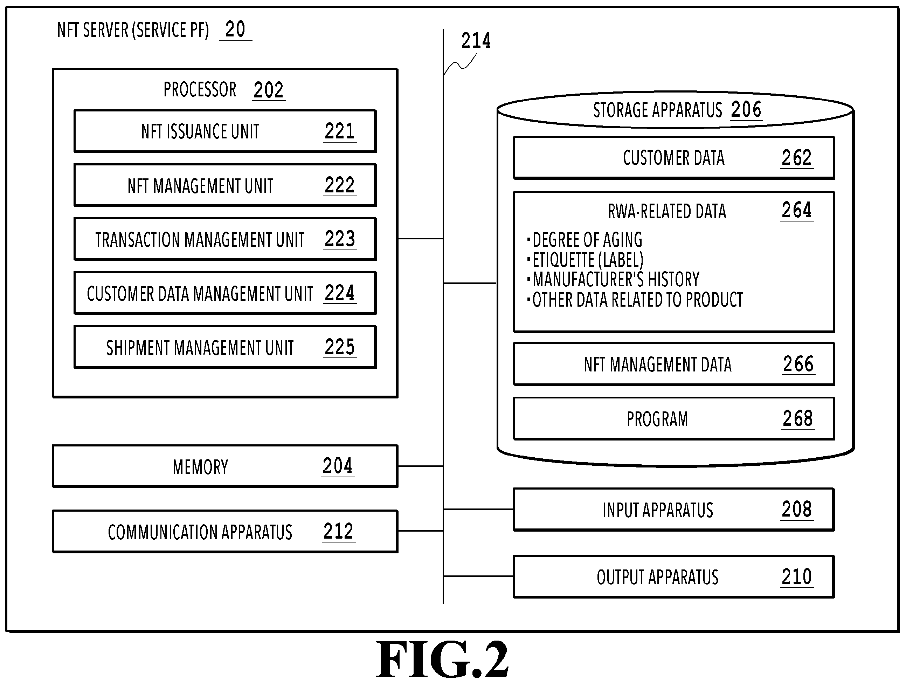

A description will be given below of a configuration example of the NFT server 20 which may provide the NFT service described above. FIG. 2 is a block diagram illustrating the configuration example of the NFT server (service PF) 20 illustrated in FIG. 1.

As illustrated in FIG. 2, the NFT server 20 includes, for example, a processor 202, a memory 204, a storage apparatus 206, an input apparatus 208, an output apparatus 210, and a communication apparatus 212. These components are communicably connected to each other, for example, via a bus 214.

In FIG. 2, the term "apparatus" may be replaced with another term such as circuitry, device, or unit. The NFT server 20 may be configured to include one or more of the apparatuses illustrated in FIG. 2 or may be configured without a part of the apparatuses.

Each function in the NFT server 20 may be implemented, for example, by the processor 202 reading via the memory 204 and executing a program (or application; the same applies hereafter) 268 and/or data used along with the execution of the program 268 from the storage apparatus 206. The processor 202 is an example of a computing device equipped with computational capability, such as a central processing unit (CPU).

The program 268 may include instructions (e.g., program codes) that cause the processor 202 to function or operate as an NFT issuance unit 221, an NFT management unit 222, a transaction management unit 223, a customer data management unit 224, and a shipment management unit 225 by, for example, when the processor 202 reads and executes the program 268.

The program 268 may, for example, be stored in advance in the storage apparatus 206, or may be received by the NFT server 20 via a computer-readable storage medium or the network 120 (in other words, a telecommunications line). Further, the program 268 may be incorporated as a part of the operating system (OS) of the NFT server 20.

The memory 204 and the storage apparatus 206 are both examples of computer-readable storage media. The memory 204 may be configured with, for example, at least one of the following storage media: ROM (Read Only Memory), EPROM (Erasable Programmable ROM), EEPROM (Electrically Erasable Programmable ROM), and RAM (Random Access Memory).

The storage apparatus 206 may be configured with, for example, at least one of the following storage media: an optical disc such as a CD-ROM (Compact Disc ROM), a hard disk drive, a solid-state drive (SSD), a flexible disk, a magneto-optical disk (e.g., a compact disc, a Blu-ray (registered trademark) disc), or flash memory.

The input apparatus 208 may correspond to an input device (e.g., a keyboard, mouse, microphone, switch, button, sensor, camera, etc.) that receives input from an external device. The output apparatus 210 may correspond to an output device (e.g., a display, printer, speaker, etc.) that provides an output to an external device. The input apparatus 208 and the output apparatus 210 may be an integrated configuration such as a touch panel.

The communication apparatus 212 is an example of a hardware device for communicating with an external device (e.g., the blockchain 40, terminal 60, 80A, 80B, or 100 as a communication partner) via the network 120. The communication apparatus 212 may also be referred to as, for example, network device, network controller, network card, communication module, or the like.

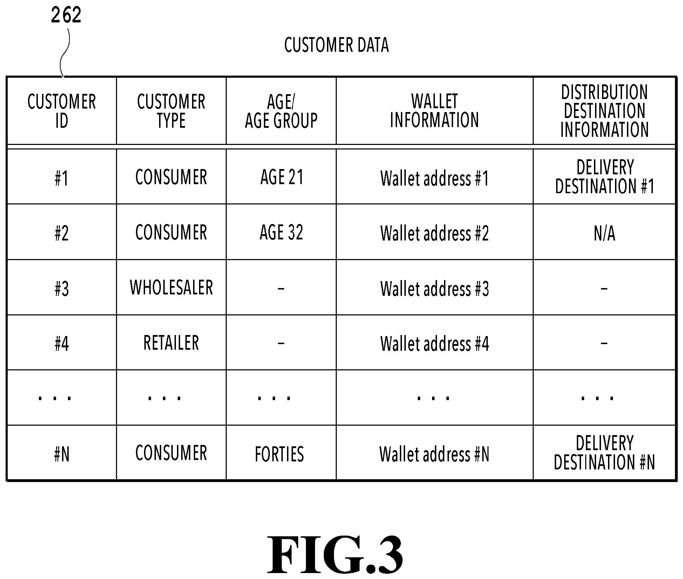

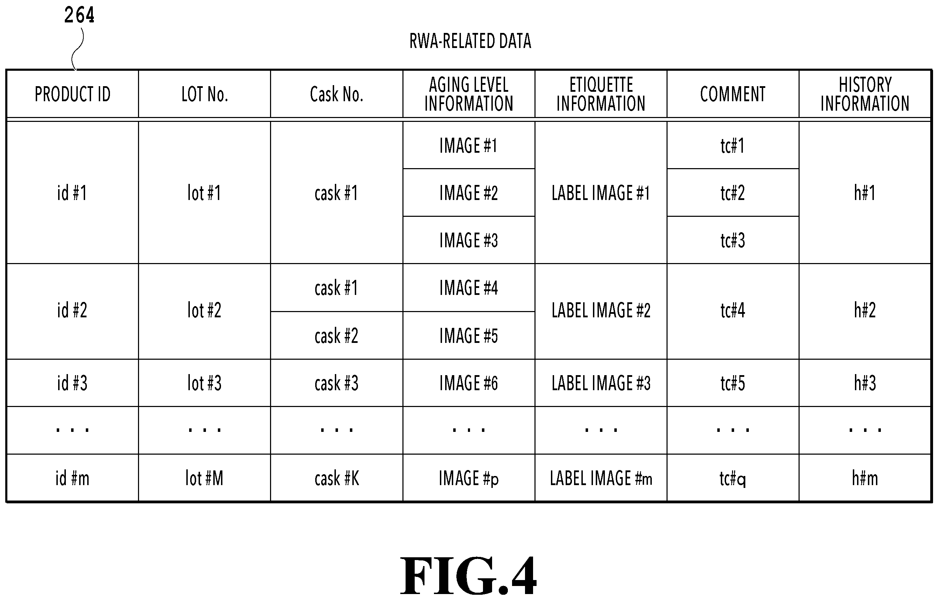

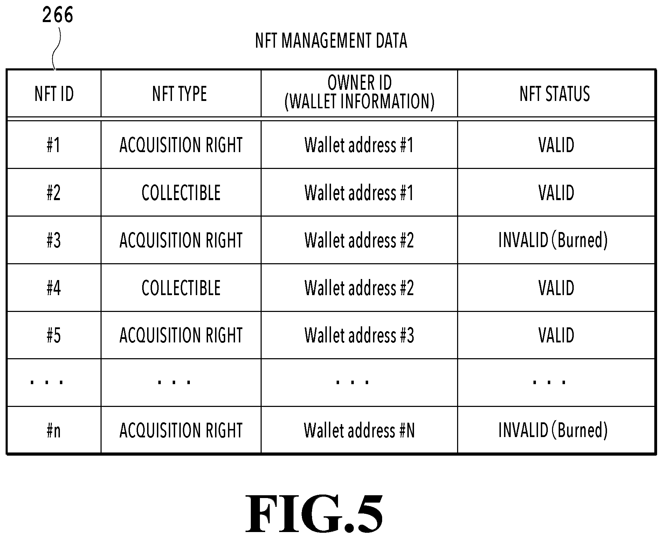

In addition to the program 268 described above, the storage apparatus 206 stores, for example, customer data 262, RWA-related data 264, and NFT management data 266. An example of the customer data 262 is illustrated in FIG. 3, an example of the RWA-related data 264 is illustrated in FIG. 4, and an example of the NFT management data 266 is illustrated in FIG. 5.

### <Example of Customer Data 262>

As illustrated in FIG. 3, the customer data 262, as a non-limiting example, includes data associated, for each identifier for identifying a customer (customer IDs #1 to #N; N is an integer of 1 or greater), with information indicative of a customer type (consumers, wholesalers, retail stores, etc.), information indicative of the customer's age or age group, wallet information (e.g., a wallet address) that identifies a wallet which the customer owns on (or has an access right to) the blockchain 40, and delivery destination information (e.g., the customer's name or designation, address information that the customer has pre-designated as the delivery destination of an alcoholic beverage product, etc.).

In the present embodiment, The customer data 262 is assumed to be KYC-verified data-obtained, for example, through a predetermined identity-verification procedure conducted between the customer and the manufacturer, or between the customer and a provider (or an administrator; for example, a system in a financial institution such as a bank) of the NFT server 20. Further, in the customer data 262, the wallet information may be wallet information that the manufacturer has opened as a KYC-certified wallet and provided to the customer or may be wallet information that has been opened by the customer independently and received from the customer.

Furthermore, in the customer data 262, the personal information such as a customer's age and/or address information may be limited to, for example, personal information on a customer who has consented to collection of personal information in a KYC procedure. When delivering an alcoholic beverage product to a customer who has not consented to collection of personal information and the like, a delivery destination may be conveyed to a delivery company using, for example, a zero-knowledge proof (ZKP) technique.

For using the ZKP technique, the customer data 262 may be encrypted and then stored in the storage apparatus 206. Encryption and decryption of the customer data 262 may be performed, for example, in the processor 202 (e.g., the shipment management unit 225). In other words, the processor 202 or the shipment management unit 225 may be provided with an encryption unit that encrypts the customer data 262 and a decryption unit that decrypts the encrypted customer data 262.

### <Example of RWA-Related Data 264>

The RWA-related data 264 illustrated in FIG. 4 includes, as a non-limiting example, data associated, for each identifier (product ID) of an alcoholic beverage product, with a lot number, a cask number, aging level information (e.g., image data indicative of an aging level), etiquette information (e.g., label image data regarding the alcoholic beverage product), a comment about the alcoholic beverage product (e.g., a tasting comment), and history information on a manufacturer or the product. There may be one or more pieces of aging level information and/or one or more comments for each alcoholic beverage product. In FIG. 4, m, p, q, M, and K are all integers of one or greater.

"Product ID" is information that uniquely identifies an alcoholic beverage product, and may be, for example, a serial number assigned to each individual alcoholic beverage product. "Lot No." is, for example, a number that identifies products manufactured (e.g., bottled) during the same period. "Cask No." is, for example, a number that identifies a barrel (cask) used to brew whiskey.

In cases of whiskey products, whiskey brewed and aged in a plurality of different aging barrels may be blended to produce a single product (e.g., a whiskey bottle). For example, in FIG. 4, a whiskey product with lot number #1 indicates that whiskey drawn from a single barrel identified by cask number #1 is bottled. On the other hand, a whiskey product with lot number #2 indicates that whiskey drawn from two different barrels with cask numbers #1 and #2 is blended and bottled.

Incidentally, it is assumed that the customer data 262 and the RWA-related data 264 are provided, for example, to the NFT server 20 in advance from the manufacturer terminal 60 and are shared (in other words, integrated or synchronized) between the NFT server 20 and the manufacturer terminal 60.

### <Example of NFT Management Data 266>

The NFT management data 266 illustrated in FIG. 5, as a non-limiting example, includes data associated, for each NFT issued by the NFT server 20, with the type of NFT (acquisition right or collectible), an owner ID identifying the current owner of the NFT, and an NFT status (e.g., valid or invalid). The owner ID may be represented, for example, by information on a wallet to which the NFT has been minted (e.g., a wallet address).

For example, in FIG. 5, an acquisition right NFT identified by NFT ID #1, together with a collectible NFT identified by NFT ID #2, is minted to user's (customer's) wallet address #1, and both NFTs are "valid" (in other words, not burned).

Incidentally, as illustrated by NFT ID #5 and NFT ID #n in FIG. 5, the NFT server 20 may issue acquisition right NFTs not involving any collectible NFTs.

Based on the customer data 262, RWA-related data 264, and NFT management data 266, the NFT server 20, working in cooperation with the blockchain 40, control s or manages NFT-related transactions such as issuance, transfer, or burning of acquisition right NFTs and collectible NFTs.

For example, referring to FIG. 2 again, for example, in response to receipt of an NFT issuance request from the manufacturer terminal 60, the NFT issuance unit 221 issues, based on the customer data 262 and the RWA-related data 264, an acquisition right NFT and a collectible NFT for an alcoholic beverage product. The issued NFTs are minted to an issuance destination wallet address designated in the NFT issuance request, for example, based on wallet information in the customer data 262.

In a case where no issuance destination wallet address is designated in the NFT issuance request, the NFT issuance unit 221 may mint an NFT set as the manufacturer's inventory of the alcoholic beverage product, to the wallet address of the manufacturer terminal 60, which is an NFT issuance request source, for example, based on the wallet information in the customer data 262.

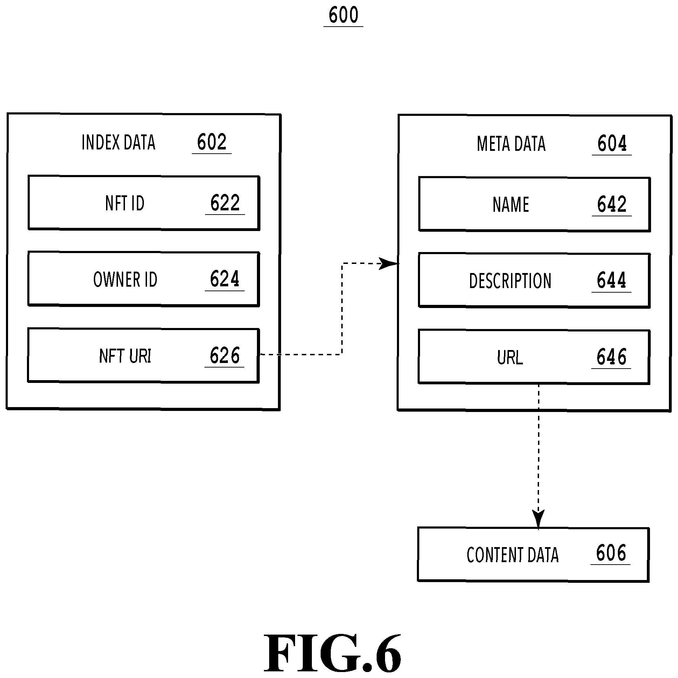

FIG. 6 illustrates an example of a data structure 600 of an NFT. The data structure 600 illustrated in FIG. 6 may be common to both acquisition right NFTs and collectible NFTs. The data structure 600 includes, for example, index data 602, metadata 604, and content data 606.

The index data 602 may include, for example, an NFT ID 622, an owner ID 624, and a URI (Uniform Resource Identifier) 626 indicative of a link to the metadata 604. The NFT ID 621 is identification information for uniquely identifying an NFT, and the owner ID 624 may include the wallet address of the current owner of the NFT and the like. Ownership of the NFT is transferred on the blockchain 40 when the owner ID 624 is updated in response to the transfer of the NFT on the blockchain 40.

The metadata 604 may include, for example, an NFT name 642, an NFT description 644, and a URL (Uniform Resource Locator) 646 indicative of a link to a location where the content data 606 is stored (e.g., a resource on the Internet).

The content data 606 linked to the metadata 604 by the URL 646 may include, for example, image data that proves a right to acquire an alcoholic beverage product for an acquisition right NFT and may include the RWA-related data described above for a collectible NFT.

It is possible for the terminal 60, 80A, 80B, or 100 having an access right to a wallet address to which an NFT has been minted to, for example, display metadata indicated by the URI 626 and the content data 606 indicated by the URL 646 on a display or print the data using a printer.

Incidentally, for example, the NFT index data 602 may be recorded on the blockchain 40 (on-chain), while the metadata 604 and the content data 606 may be recorded on a storage medium different from the blockchain 40 (off-chain), for example, on a distributed storage or network such as the IPFS (InterPlanetary File System).

Referring to FIG. 2 again, the NFT management unit 222, working for example in cooperation with the NFT issuance unit 221 and/or the transaction management unit 223, records and updates the NFT management data 266 (see FIG. 5) in units of NFTs in response to an NFT-related transaction on the blockchain 40 (such as issuance, transfer, burning, or the like of an NFT).

The transaction management unit 223 manages, for example, NFT-related transactions on the blockchain 40 (such as issuance, burning, transfer, or the like of an NFT). For example, in response to reception of an NFT issuance request from the manufacturer terminal 60, the transaction management unit 223 causes the NFT issuance unit 221 to issue an NFT. In response to the issuance of the NFT, the NFT management unit 222 updates the NFT management data 266.

Further, in response to reception of, for example, a request to transfer or burn an NFT from the client terminal 80A, 80B, or 100, the transaction management unit 223 performs the corresponding transfer or burn of the NFT on the blockchain 40.

In response to the transfer of the NFT, for example, the NFT management unit 222 updates the owner ID 624 (e.g., a wallet address) of the NFT identified by the NFT ID 622 designated in the transfer request to the new owner ID 624 of a transfer destination. The NFT management unit 222 also updates the status of an NFT identified by the NFT ID 622 designated in the request to burn the NFT to an invalid state.

The customer data management unit 224 manages, for example, the customer data 262 (see FIG. 3), as illustrated in FIGs. 2 and 3. As described above, the customer data 262 is linked to or synchronized with customer data held by the manufacturer terminal 60, and the customer data management unit 224 may update the customer data 262, for example, in response to customer data being provided from the manufacturer terminal 60.

The shipment management unit 225, working for example in cooperation with the NFT management unit 222 and/or the transaction management unit 223, performs, when an acquisition right NFT is burned, a process to ship an alcoholic beverage product associated with the burned acquisition right NFT to a customer who has burned the acquisition right NFT.

For example, the shipment management unit 225 may identify a customer ID in the NFT management data 266, which has burned the acquisition right NFT with reference to the customer data 262 based on the owner ID 624 (e.g., a wallet address) of the burned (invalidated) NFT. The shipment management unit 225 then performs the process of shipping the alcoholic beverage product to delivery destination information corresponding to the identified customer ID in the customer data 262. The shipping process may include, for example, instructing the manufacturer terminal 60 to ship the alcoholic beverage product, or requesting the delivery of the alcoholic beverage product to a terminal of a delivery company (not illustrated) partnered with a manufacturer.

Further, the shipping process may include, for example, verifying the age or age group of the customer who has burned the acquisition right NFT. By verifying the customer's age or age group, it is possible to prevent alcoholic beverage products from being shipped to customers who are under an age or age group for which purchase of alcoholic beverages is banned.

Shipping instructions may include, for example, delivery destination information identified in the customer data 262. When no delivery destination information is registered in the customer data 262, for example, because the customer have not consented to collection of personal information, the delivery destination information may be conveyed to the delivery company using the ZKP technique.

In the configuration example described above regarding the NFT server 20, the term "... unit" is replaceable with another term such as "... circuitry," "... block," "... module," or "... means." Further, a part or all of the components or functions exemplified in the NFT server 20 may be integrated into a single component or function or may be separated further into a plurality of components or functions.

Furthermore, one or more of the functions of the NFT issuance unit 221, NFT management unit 222, transaction management unit 223, customer data management unit 224, and shipment management unit 225 described above may be arranged and executed in a distributed manner across a plurality of the NFT servers 20. The plurality of NFT servers 20 may be, for example, a group of cloud servers virtualized using a virtualization technique.

Moreover, one or more of the NFT issuance unit 221, NFT management unit 222, transaction management unit 223, customer data management unit 224, and shipment management unit 225 may be implemented, for example, on the blockchain 40 (e.g., as a smart contract). In other words, the NFT server 20 may correspond to one or more of a plurality of computers (nodes) that constitute the blockchain 40.

Further, each client terminal, as the manufacturer terminal 60, wholesaler terminal 80A, retail store terminal 80B, and consumer terminal 100, may include, as a hardware configuration example, a processor, memory, storage apparatus, input apparatus, output apparatus, and communication apparatus, that are communicably connected to each other via a bus, like the NFT server 20.

Each client terminal 60, 80A, 80B, and 100 may include, as a functional configuration example, a functional unit corresponding to the NFT management unit 222 and the transaction management unit 223. The storage apparatus may store a program that embodies that functional unit, when it is read and executed by the processor.

### <Operation Examples>

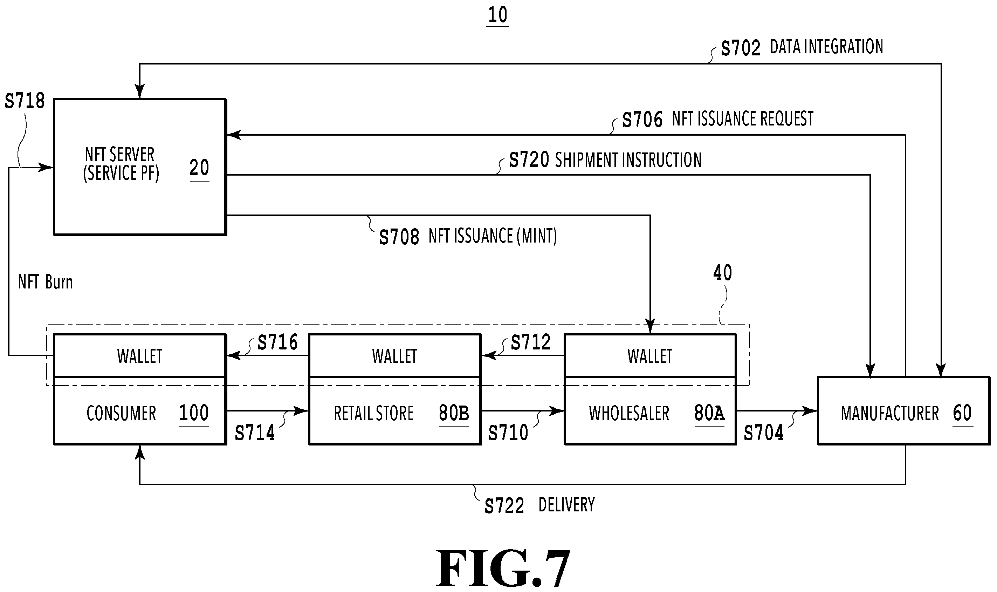

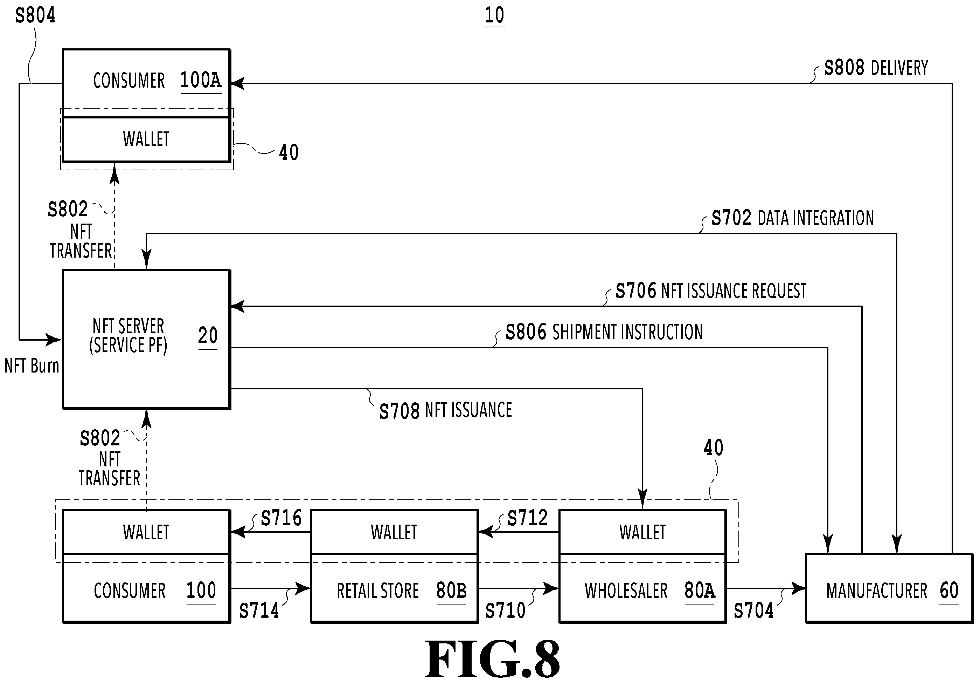

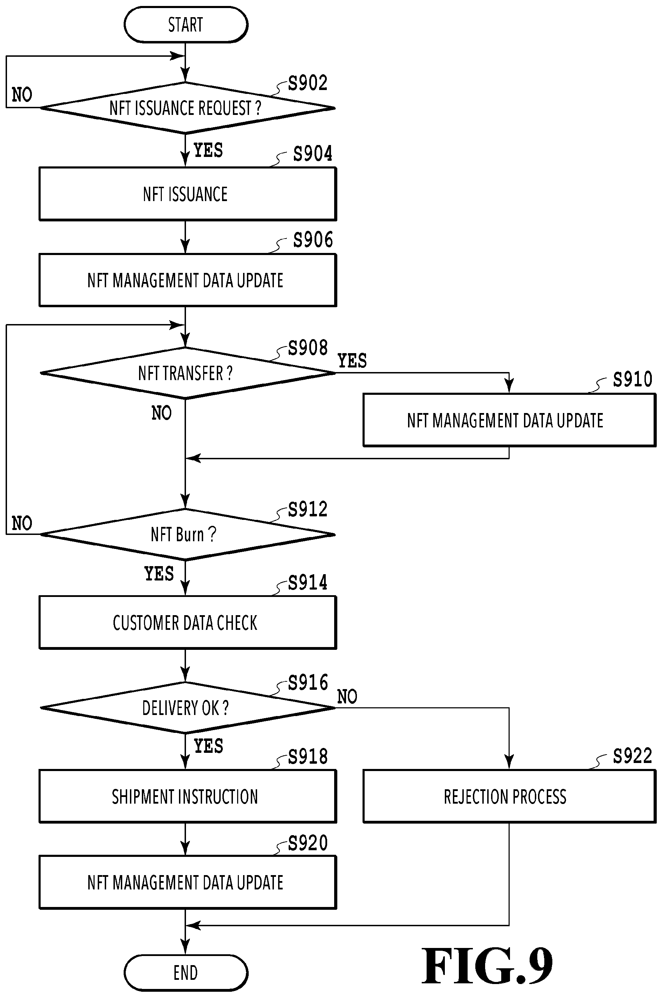

Next, operation examples of the system 10 configured as described above will be described with reference to FIGs. 7, 8, and 9. FIG. 7 is a diagram illustrating the overall operationnal flow of the system 10 in a case where a consumer personally consumes an alcoholic beverage product (e.g., a whiskey product), and FIG. 8 is a diagram illustrating the overall operational flow of the system 10 in a case where a consumer gifts a whiskey product to another consumer. FIG. 9 is a flowchart illustrating an operation example focusing on the NFT server 20 in the operational flows illustrated in FIGs. 7 and 8.

### <Self-Consumption Case>

In FIG. 7, the manufacturer terminal 60 provides the NFT server 20 with the customer data 262 and RWA-related data 264 to perform data integration between the manufacturer terminal 60 and the NFT server 20 (S702).

After that, for example, when a request to purchase a whiskey product is received from the wholesaler terminal 80A (S704), an NFT issuance request for the whiskey product is sent to the NFT server 20 (S706).

In the NFT issuance request, for example, information on a whiskey product associated with an acquisition right NFT (e.g., a product ID, quantity, etc.), RWA-related data associated with a collectible NFT (an aging level, manufacturer's history, etc.), a mint destination wallet address, and the like may be designated by the manufacturer terminal 60. In this example, the mint destination wallet address is the wallet address of the wholesaler terminal 80A that has sent the NFT issuance request.

As illustrated in FIG. 9, the NFT server 20 checks whether an NFT issuance request is received (S902; NO). When the NFT issuance request is received (S902; YES), the NFT server 20, for example, in the NFT issuance unit 221, generates an acquisition right NFT and a collectible NFT based on information designated in the NFT issuance request, the customer data 262, and the RWA-related data 264.

The NFT issuance unit 221 then, for example, issues (or mints) the acquisition right NFT and the collectible NFT in a set to the wallet address of the wholesaler terminal 80A that has sent the NFT issuance request (S708 in FIG. 7 and S904 in FIG. 9). In response to the issuance of the NFTs, the NFT server 20 updates the NFT management data 266, for example, using the NFT management unit 222 (S906 in FIG. 9).

Subsequently, as illustrated in FIG. 7, for example, when a request to purchase a whiskey product is sent from the retail store terminal 80B to the wholesaler terminal 80A (S710), the wholesaler terminal 80A sells the retail store terminal 80B the set of the acquisition right NFT and the collectible NFT instead of the actual whiskey product (S712).

For example, the wholesaler terminal 80A requests the NFT server 20 to transfer each of the acquisition right NFT and the collectible NFT to the retail store terminal 80B. In this transfer request, the IDs 622 of the NFTs to be transferred and the wallet address of a transfer destination (in this example, the retail store terminal 80B) are designated, for example.

The NFT server 20 (e.g., the transaction management unit 223) checks whether a request for transferring or burning of an NFT is received from the client terminal 80A, 80B, or 100, as illustrated, for example, in FIG. 9 (NO in S908 and S912).

When the NFT server 20 receives an NFT transfer request from the wholesaler terminal 80A (S908; YES), the transaction management unit 223, for example on the blockchain 40, updates the owner ID 624 of each of the acquisition right NFT and collectible NFT subject to the transfer request to the wallet address of the retail store terminal 80B.

As a result, ownership of the acquisition right NFT and collectible NFT is transferred from the wholesaler terminal 80A to the retail store terminal 80B. In response to the transfer of the acquisition right NFT and collectible NFT, for example, the NFT management unit 222 updates the owner IDs of the relevant NFTs in the NFT management data 266 (S910).

Subsequently, as illustrated in FIG. 7, for example, when a request to purchase a whiskey product is sent from the consumer terminal 100 to the retail store terminal 80B (S714), the retail store terminal 80B, like the wholesaler terminal 80A, sells the consumer terminal 100 a set of an acquisition right NFT and a collectible NFT instead of the actual whiskey product (S716).

For example, the retail store terminal 80B requests the NFT server 20 to transfer each of the acquisition right NFT and the collectible NFT to the consumer terminal 100. In this transfer request, the IDs 622 of the NFTs to be transferred and the wallet address of a transfer destination (in this example, the consumer terminal 100) are designated, for example.

When the NFT transfer request is received by the NFT server 20 from the retail store terminal 80B (S908 in FIG. 9; YES), the transaction management unit 223 updates for example on the blockchain 40, the owner ID of each of the acquisition right NFT and collectible NFT subject to the transfer request to the wallet address of the consumer terminal 100.

As a result, ownership of the acquisition right NFT and collectible NFT is transferred from the retail store terminal 80B to the consumer terminal 100. In response to the transfer of the acquisition right NFT and collectible NFT, for example, the NFT management unit 222 updates the owner IDs of the relevant NFTs in the NFT management data 266 (S910 in FIG. 9).

In the above transactions to transfer the acquisition right NFT and collectible NFT, a method of settling a purchase price (in other words, establishment of a sales contract or transfer contract) is not specifically limited, but may be, for example, performed by sending a remittance between cryptocurrency wallet addresses corresponding to the purchase price. The cryptocurrency remittance process may be implemented, for example, by a smart contract on the blockchain 40.

Subsequently, as illustrated in S718 in FIG. 7, by requesting the NFT server 20 to burn, among an acquisition right NFT and a collectible NFT, the acquisition right NFT at any time, the consumer terminal 100 may exercise a right to claim delivery of a whiskey product associated with the acquisition right NFT. For example, the ID 622 of the NFT to be burned is designated in the consumer terminal 100 for the request to burn the acquisition right NFT.

In the NFT server 20, for example, the transaction management unit 223 checks whether the request to burn the acquisition right NFT is received from the consumer terminal 100 (NO in S908 and YES in S912 in FIG. 9).

When the burn request is received by the NFT server 20, the NFT server 20, for example, using the shipment management unit 225, refers to the NFT management data 266 based on the NFT ID 622 designated in the received burn request to identify an owner ID.

The shipment management unit 225 then identifies a customer ID by referring to the customer data 262 illustrated in FIG. 3 based on the identified owner ID, and verifies whether the user of the consumer terminal 100 identified by the identified customer ID is a legitimate purchaser of the whiskey product (S914 and S916 in FIG. 9).

In a case where no consent to collect personal information has been obtained from the user, age or age group verification may be performed between the NFT server 20 and the consumer terminal 100, for example, using the ZKP technique.

As a result of this age or age group verification, when the user of the consumer terminal 100 is verified as an age or age group at which alcoholic beverages are permitted to be provided, the shipment management unit 225 determines that the user of the consumer terminal 100 is a legitimate purchaser of the whiskey product (S916; YES).

In response to the determination that the purchaser is legitimate, the shipment management unit 225 instructs the manufacturer terminal 60 to ship, for example, the actual whiskey product associated with the burned NFT to the user of the consumer terminal 100 (S720 in FIG. 7 and S918 in FIG. 9).

Shipping instructions include, for example, delivery destination information identified in the customer data 262 (see FIG. 3). The shipment management unit 225 also instructs the transaction management unit 223 to invalidate the burned NFT, for example.

In response to instructions from the shipment management unit 225, the transaction management unit 223 burns the acquisition right NFT corresponding to the NFT ID designated in the burn request to invalidate it on the blockchain 40, for example. In response to this invalidation of the acquisition right NFT, for example, the NFT management unit 222 updates the status of the burned acquisition right NFT to an invalid (or burned) state in the NFT management data 266 (S920 in FIG. 9).

When the manufacturer terminal 60 receives a shipping instruction from the NFT server 20, the manufacturer terminal 60 ships the burned whiskey product to a delivery destination indicated by the delivery destination information designated in the received shipping instruction (S722 in FIG. 7). The delivery of the whiskey product to the delivery destination may be performed by, for example, the manufacturer's delivery department or by a delivery company partnered with the manufacturer.

When the delivery of the whiskey product has been completed, a delivery company terminal (not illustrated) may notify, for example, the NFT server 20 that the delivery has been completed. When the NFT server 20 (e.g., the shipment management unit 225) receives a delivery completion notification, for example, the NFT server 20 may transmit the delivery completion notification to the manufacturer terminal 60.

Incidentally, in S916 of FIG. 9, in a case where the user of the consumer terminal 100 is not under an age or age group at which alcoholic beverage products are permitted to be provided (S916; NO), the shipment management unit 225 executes a rejection process, for example by refraining from performing the shipping process for the whiskey product and notifying the consumer terminal 100 that alcoholic beverages are not permitted to be provided (S922 of FIG. 9).

### <Case of Gifting>

In the case of gifting, for example, as illustrated in FIG. 8, a first consumer terminal 100, which has obtained a set of an acquisition right NFT and a collectible NFT, requests the NFT server 20 to transfer (or assign) the set of NFTs to another (second) consumer terminal 100A, for example, for the purpose of gifting (S802).

In this transfer request, the ID 622 of an NFT to be transferred and the wallet address of a transfer destination (consumer terminal 100A) is designated, for example. Incidentally, a flow through which the first consumer terminal 100 obtains the acquisition right NFT and the collectible NFT may be the same as illustrated in FIG. 7.

When the NFT server 20 receives an NFT transfer request to the second consumer terminal 100A from the first consumer terminal 100 (S908 in FIG. 9; YES), for example, the transaction management unit 223 updates the owner ID 624 of each of the acquisition right NFT and collectible NFT subject to the transfer request to the wallet address of the consumer terminal 100A.

As a result, ownership of the acquisition right NFT and collectible NFT is transferred from the first consumer terminal 100 to the second consumer terminal 100A (S802 in FIG. 8). In response to the transfer of the acquisition right NFT and collectible NFT, for example, the NFT management unit 222 updates the owner IDs of the relevant NFTs identified by NFT IDs in the NFT management data 266 (S910 in FIG. 9).

Subsequently, as illustrated in S804 in FIG. 8, by requesting the NFT server 20 to burn, among an acquisition right NFT and a collectible NFT, the acquisition right NFT at any time, the second consumer terminal 100A may exercise a right to claim delivery of a whiskey product associated with the acquisition right NFT. For example, the ID 622 of the NFT to be burned is designated in the second consumer terminal 100A for the request to burn the acquisition right NFT.

As illustrated in FIG. 9, the NFT server 20 checks, for example, in the transaction management unit 223, to see that the request to burn the acquisition right NFT has been received (NO in S908 and YES in S912). Thereafter, the process in the "self-consumption case" illustrated in FIG. 7 in which the "consumer terminal 100" is replaced with the "consumer terminal 100A" is performed.

For example, when the NFT server 20 receives the request to burn the acquisition right NFT (S912 in FIG. 9; YES), the transaction management unit 223 performs a process such as age verification as in the self-consumption case, and then instructs the manufacturer terminal 60 to ship the actual whiskey product associated with the burned acquisition right NFT to a delivery destination designated by the second consumer terminal 100A (S806 in FIG. 7 and S918 in FIG. 9).

After that, as in the "self-consumption case" (FIG. 7), the actual whiskey product subject to burned is shipped to the delivery destination identified by the delivery destination information designated in the shipping instruction (S808 in FIG. 8).

Incidentally, there may be a case where a user of the second consumer terminal 100A, who is a subsequent transferee of the acquisition right NFT, further transfers (or assigns) the acquisition right NFT without burning it to another (third) consumer terminal for the purpose of gifting. In such a case as well, with burning the acquisition right NFT by the final subsequent transferee of the acquisition right NFT, it is possible to perform the delivery of the whiskey product to the final subsequent transferee in the same manner as in the operation example described above.

As described above, according to the system 10 of the present embodiment, by forming a commercial distribution flow that does not involve any actual products with use of acquisition right NFTs and distributing the NFTs in place of the actual products, it is possible to prevent deterioration in the quality of whiskey products and/or illicit resale, thereby protecting manufacturers and consumers .

Further, by distributing a collectible NFT associated with aging level information on each whiskey product, together with an acquisition right NFT for the whiskey product, it is possible to visualize and present invisible values such as the degree of aging to a consumer as an ancillary value.

Accordingly, it is possible for the consumer to enjoy a new experiential value different from etiquette collection in the real world. Further, by tokenizing aging level information regarding an intermediate aging stage before bottling into an NFT, it is possible to present information on an aging level to a consumer before the consumer obtains a finished product.

Thus, it is possible for the consumer to control when to exercise a right to claim delivery of the whiskey product as a finished product based on, for example, the aging level information regarding the intermediate aging stage. Accordingly, it is possible for the consumer to obtain the finished product at an aging level suited for the consumer's preference at a desired timing.

Further, by tokenizing information such as the manufacturer's history, comments regarding the whiskey product into NFTs and distributing the NFTs together with acquisition right NFTs, it is possible to directly convey an intended message of the manufacturer.

### <Supplemental Matters>

In the operation examples described above with reference to FIGs. 7 to 9, although the wholesaler terminal 80A corresponds to a terminal that requests the manufacturer terminal 60 to purchase whiskey products, the retail store terminal 80B or the consumer terminal 100 may correspond to the terminal that requests the manufacturer terminal 60 to purchase whiskey products.

In other words, there may be a case where the retail store terminal 80B requests the manufacturer terminal 60 to purchase whiskey products without going through the wholesaler terminal 80A, and there may also be a case where the consumer terminal 100 requests the manufacturer terminal 60 to purchase whiskey products without going through the vendor terminal 80.

In either case, the manufacturer terminal 60, for example, in an NFT issuance request to the NFT server 20, designates the wallet address of an NFT issuance destination as the wallet address of a product purchase request source, thereby minting an acquisition right NFT and a collectible NFT from the NFT server 20 to the wallet address of a product purchase request source terminal.

Further, a case where one or more sets of an acquisition right NFT and a collectible NFT are minted to the wallet address of the manufacturer terminal 60 as, for example, virtual inventories of a whiskey product may also be assumed.

In such a case, in response to a request to purchase the whiskey product, the manufacturer terminal 60 may send, to the NFT server 20, an NFT transfer request to the wallet address of a purchase request source instead of an NFT issuance request to the wallet address of the purchase request source, for example, in S706 in FIGs. 7 and 8.

An update in an NFT owner ID associated with such an NFT transfer transaction from the manufacturer terminal 60 to a purchase request source terminal may be the same as an update associated with an NFT transfer transaction between the wholesaler terminal 80A and the retail store terminal 80B, or between the retail store terminal 80B and the consumer terminal 100.

In the embodiment described above, a plurality of blockchains 40 may exist. For example, the NFT server 20 (e.g., the transaction management unit 223) may be configured to manage transactions involving acquisition right NFTs and/or collectible NFTs based on a protocol referred to ILP (InterLedger Protocol) that associates tokens in the different blockchains 40.

Although the present disclosure has been described above with reference to the exemplary embodiment, the present disclosure may be implemented in various embodiments in which the configuration and details are modified without departing from the spirit of the present disclosure.

### Industrial Applicability

The present disclosure is useful, for example, for trading alcoholic beverage products utilizing NFTs.

### Reference Signs List

- 10: NFT service system
- 20: NFT server
- 40: Blockchain system
- 60: Client terminal (manufacturer terminal)
- 80A: Client terminal (wholesaler terminal)
- 80B: Client terminal (retail store terminal)
- 100: Client terminal (consumer terminal)
- 120: Network (NW)
- 202: Processor
- 204: Memory
- 206: Storage apparatus
- 208: Input apparatus
- 210: Output apparatus
- 212: Communication apparatus
- 214: Bus
- 221: NFT issuance unit
- 222: NFT management unit
- 223: Transaction management unit
- 224: Customer data management unit
- 225: Shipment management unit
- 262: Customer data
- 264: RWA-related data
- 266: NFT management data
- 268: Program
- 602: Index data
- 604: Meta data
- 606: Content data
- 622: NFT ID
- 624: Owner ID
- 626: NFT URI
- 642: NFT name
- 644: NFT description
- 646: URL

## Claims

1. A server comprising:
a non-fungible token issuance unit that issues, on a blockchain, a first non-fungible token associated with a right to claim delivery of an alcoholic beverage product, and a second non-fungible token associated with ancillary data related to the alcoholic beverage product;
a transaction management unit that manages transactions on the blockchain involving the first non-fungible token and the second non-fungible token; and
a shipment management unit that instructs, when a deletion request to delete the first non-fungible token is made in the transaction, a manufacturer terminal of the alcoholic beverage product to ship the alcoholic beverage product to a delivery destination designated by a request source terminal that has made the deletion request.

2. The server according to claim 1, wherein the alcoholic beverage product is a whiskey product, and
wherein the ancillary data includes information regarding an intermediate aging stage before the whiskey product is commercialized as a finished product.

3. The server according to claim 2, wherein the ancillary data includes one or more selected from:
data indicative of a label of the whisky product;
data regarding a history of a manufacturer of the whisky product;
data regarding a history of the whisky product; and
data indicative of tasting comments regarding the whisky product.

4. The server according to any one of claims 1 to 3, wherein the shipment management unit verifies, based on an age or age group of a user registered in advance for the request source terminal, whether the user is of an age or age group at which purchase of the alcoholic beverage product is permitted, and instructs, upon verifying that the user is of the age or age group at which purchase of the alcoholic beverage product is permitted, the manufacturer terminal to ship the alcoholic beverage product.

5. The server according to any one of claims 1 to 3, wherein the request source terminal is a first consumer terminal that has received transfer of the first non-fungible token and the second non-fungible token in the transaction, or is a second consumer terminal that has received transfer of the first non-fungible token and the second non-fungible token from the first consumer terminal in the transaction.

6. A method executed by a server, the method comprising:
issuing, on a blockchain, a first non-fungible token associated with a right to claim delivery of an alcoholic beverage product, and a second non-fungible token associated with ancillary data related to the alcoholic beverage product;
managing transactions on the blockchain involving the first non-fungible token and the second non-fungible token; and
instructing, when a deletion request to delete the first non-fungible token is made in the transaction, a manufacturer terminal of the alcoholic beverage product to ship the alcoholic beverage product to a delivery destination designated by a request source terminal that has made the deletion request.

7. A program for causing a server to execute processing comprising:
issuing, on a blockchain, a first non-fungible token associated with a right to claim delivery of an alcoholic beverage product, and a second non-fungible token associated with ancillary data related to the alcoholic beverage product;
managing transactions on the blockchain involving the first non-fungible token and the second non-fungible token; and
instructing, when a deletion request to delete the first non-fungible token is made in the transaction, a manufacturer terminal of the alcoholic beverage product to ship the alcoholic beverage product to a delivery destination designated by a request source terminal that has made the deletion request.
